# EUROPÄISCHE PATENTSCHRIFT

(11) **EP 4 233 113 B1**
(45) Veröffentlichungstag und Bekanntmachung des Hinweises auf die Patenterteilung: **25.03.2026**
(21) Anmeldenummer: 21786459.4
(22) Anmeldetag: 01.10.2021
(51) Int. Cl.: H01M 8/04089, H01M 8/04111, H01M 8/04119

(54) **BRENNSTOFFZELLENSYSTEM SOWIE VERFAHREN ZUM BETREIBEN EINES BRENNSTOFFZELLENSYSTEMS**
FUEL CELL SYSTEM AND METHOD FOR OPERATING A FUEL CELL SYSTEM
SYSTÈME DE PILE À COMBUSTIBLE ET PROCÉDÉ DE FONCTIONNEMENT D'UN SYSTÈME DE PILE À COMBUSTIBLE

(30) Priorität: 21.10.2020 DE 102020213266
(43) Veröffentlichungstag der Anmeldung: 30.08.2023
(73) Patentinhaber: Robert Bosch GmbH, 70442 Stuttgart (DE)
(72) Erfinder: WESSNER, Jochen, 73728 Esslingen (DE); KATZ, Martin, 70469 Stuttgart (DE)
(86) Internationale Anmeldenummer: PCT/EP2021/077137
(87) Internationale Veröffentlichungsnummer: WO 2022/084004

(56) Entgegenhaltungen:
- EP-A2- 1 469 543
- DE-A1- 102015 220 641
- DE-A1- 19 929 472
- FR-A1- 2 969 827
- JP-A- 2000 348 745
- US-A- 3 553 023
- US-A1- 2002 041 984

## Beschreibung

Die Erfindung betrifft ein Brennstoffzellensystem mit den Merkmalen des Oberbegriffs des Anspruchs 1. Darüber hinaus betrifft die Erfindung ein Verfahren zum Betreiben eines Brennstoffzellensystems.

### Stand der Technik

Brennstoffzellen, beispielsweise mehrere zu einem Brennstoffzellenstapel verbundene Brennstoffzellen eines Brennstoffzellensystems, benötigen zur Energieerzeugung a) einen Brennstoff, in der Regel Wasserstoff, der über einen Anodengaspfad einer Anode des Brennstoffzellenstapels zugeführt wird, und b) Sauerstoff, der über einen Kathodengaspfad einer Kathode des Brennstoffzellenstapels zugeführt wird. Als Sauerstofflieferant dient üblicherweise Luft, die der Umgebung entnommen wird. Da der Energiewandlungsprozess eine gewissen Luftmassenstrom und ein gewisses Druckniveau erfordert, wird die kathodenseitig zugeführte Luft zuvor mit Hilfe eines im Kathodengaspfad angeordneten Luftverdichters verdichtet.

Die DE102004022312A1 offenbart ein Feuchtigkeitsaustauschmodul, um Luft, die der Kathode zugeführt wird, zu befeuchten. Hierdurch kann die Membran vor einer Austrocknung und damit vor einer Schädigung bzw. vorzeitigen Alterung geschützt werden.

Solche Brennstoffzellensysteme, wie in DE 102004022312 A1 gezeigt, weisen den Nachteil auf, dass die im Kathodengaspfad angeordnete Befeuchtungseinrichtung einen nicht unerheblichen Bauraum benötigt und zudem teuer in der Anschaffung ist. Der vorliegenden Erfindung liegt daher die Aufgabe zugrunde, ein Brennstoffzellensystem anzugeben, das demgegenüber einfacher aufgebaut ist, insbesondere keine Befeuchtungseinrichtung benötigt, so dass Bauraum und Kosten eingespart werden können.

Zur Lösung der Aufgabe werden das Brennstoffzellensystem mit den Merkmalen des Anspruchs 1 sowie das Verfahren mit den Merkmalen des Anspruchs 10 vorgeschlagen. Vorteilhafte Weiterbildungen der Erfindung sind den jeweiligen Unteransprüchen zu entnehmen.

### Offenbarung der Erfindung

Das vorgeschlagene Brennstoffzellensystem umfasst einen Brennstoffzellenstapel mit einer Kathode, der über einen Kathodengaspfad Luft als Kathodengas zuführbar ist. In den Kathodengaspfad ist dabei ein Luftverdichter integriert. Erfindungsgemäß verzweigt sich der Kathodengaspfad stromabwärts des Luftverdichters in einen mit einem Einlass des Brennstoffzellenstapels verbindbaren Hauptpfad und einen mit einem Auslass des Brennstoffzellenstapels verbindbaren Nebenpfad, wobei der Hauptpfad und der Nebenpfad jeweils einzeln oder gemeinsam mit Hilfe einer Sperreinrichtung absperrbar sind. Somit kann wahlweise dem Einlass oder dem Auslass des Brennstoffzellenstapels verdichtete Luft zugeführt werden. Darüber hinaus kann im Abstellfall die Luftzufuhr in Gänze gesperrt werden.

Um im Normalbetrieb des Brennstoffzellensystems die Kathode mit ausreichend Sauerstoff bzw. Luft zu versorgen, wird die mit Hilfe des Luftverdichters verdichtete Luft über den Hauptpfad des Kathodengaspfads dem Einlass des Brennstoffzellenstapels zugeführt. Der Nebenpfad des Kathodengaspfad wird mit Hilfe der Sperreinrichtung gesperrt und die der Kathode zugeführte Luft wird wie gewohnt durch den Brennstoffzellenstapel geführt. Durch Sperren des Hauptpfads und Öffnen des Nebenpfads kann alternativ die mit Hilfe des Luftverdichters verdichtete Luft dem Auslass des Brennstoffzellenstapels zugeführt werden. Die verdichtete Luft tritt somit über den Auslass in den Brennstoffzellenstapel ein und über den Einlass wieder aus. Das heißt, dass der Brennstoffzellenstapel in der umgekehrten Richtung durchströmt wird. Die Luft führt dabei Produktwasser mit, so dass mit Hilfe des mitgeführten Produktwassers die Membranen der Brenn-Brennstoffzellensystem anzugeben, das demgegenüber einfacher aufgebaut ist, insbesondere keine Befeuchtungseinrichtung benötigt, so dass Bauraum und Kosten eingespart werden können.

Zur Lösung der Aufgabe werden das Brennstoffzellensystem mit den Merkmalen des Anspruchs 1 sowie das Verfahren mit den Merkmalen des Anspruchs 10 vorgeschlagen. Vorteilhafte Weiterbildungen der Erfindung sind den jeweiligen Unteransprüchen zu entnehmen.

### Offenbarung der Erfindung

Das vorgeschlagene Brennstoffzellensystem umfasst einen Brennstoffzellenstapel mit einer Kathode, der über einen Kathodengaspfad Luft als Kathodengas zuführbar ist. In den Kathodengaspfad ist dabei ein Luftverdichter integriert. Erfindungsgemäß verzweigt sich der Kathodengaspfad stromabwärts des Luftverdichters in einen mit einem Einlass des Brennstoffzellenstapels verbindbaren Hauptpfad und einen mit einem Auslass des Brennstoffzellenstapels verbindbaren Nebenpfad, wobei der Hauptpfad und der Nebenpfad jeweils einzeln oder gemeinsam mit Hilfe einer Sperreinrichtung absperrbar sind. Außerdem umfasst die Sperreinrichtung mindestens zwei weitere bewegliche Sperrelemente, mittels welcher der Einlass des Brennstoffzellenstapels und der Auslass des Brennstoffzellenstapels absperrbar sind. Mit Hilfe der weiteren beweglichen Sperrelemente kann ebenfalls die Luftzufuhr zur Kathode des Brennstoffzellenstapels gesperrt werden. Sie erhöhen somit die Sicherheit im Abstellfall.

Somit kann wahlweise dem Einlass oder dem Auslass des Brennstoffzellenstapels verdichtete Luft zugeführt werden. Darüber hinaus kann im Abstellfall die Luftzufuhr in Gänze gesperrt werden.

Um im Normalbetrieb des Brennstoffzellensystems die Kathode mit ausreichend Sauerstoff bzw. Luft zu versorgen, wird die mit Hilfe des Luftverdichters verdichtete Luft über den Hauptpfad des Kathodengaspfads dem Einlass des Brennstoffzellenstapels zugeführt. Der Nebenpfad des Kathodengaspfad wird mit Hilfe der Sperreinrichtung gesperrt und die der Kathode zugeführte Luft wird wie gewohnt durch den Brennstoffzellenstapel geführt. Durch Sperren des Hauptpfads und Öffnen des Nebenpfads kann alternativ die mit Hilfe des Luftverdichters verdichtete Luft dem Auslass des Brennstoffzellenstapels zugeführt werden. Die verdichtete Luft tritt somit über den Auslass in den Brennstoffzellenstapel ein und über den Einlass wieder aus. Das heißt, dass der Brennstoffzellenstapel in der umgekehrten Richtung durchströmt wird. Die Luft führt dabei Produktwasser mit, so dass mit Hilfe des mitgeführten Produktwassers die Membranen der Brennstoffzellen des Brennstoffzellenstapels befeuchtet werden. Eine Befeuchtungseinrichtung im Kathodengaspfad kann somit entfallen.

Das Umschalten zwischen Hauptpfad und Nebenpfad kann beispielsweise nach Zeitablauf und/oder in Abhängigkeit von der Wasserlast des Kathodenabgases gesteuert bzw. geregelt werden. Darüber hinaus sind Betriebsmodi möglich, in denen sowohl der Hauptpfad als auch der Nebenpfad offen gehalten werden, damit der Luftverdichter nicht gegen die Sperreinrichtung arbeiten muss. Über den jeweils geöffneten Strömungsquerschnitt kann die Strömungsrichtung durch den Brennstoffzellenstapel vorgegeben werden. Des Weiteren können im Abstellfall sowohl der Hauptpfad als auch der Nebenpfad mit Hilfe der Sperreinrichtung gesperrt werden, so dass sichergestellt ist, dass der Kathode keine Luft mehr zugeführt wird. Dies wiederum ermöglicht den Wegfall der üblicherweise vorgesehenen Absperrventile, so dass sich weiteres Einsparpotential hinsichtlich Bauraum und Kosten ergibt.

In Weiterbildung der Erfindung wird vorgeschlagen, dass der Hauptpfad und/oder der Nebenpfad des Kathodengaspfads mit Hilfe der Sperreinrichtung mit einem Kathodenabgaspfad verbindbar sind. Über die Verbindung des Nebenpfads mit dem Kathodenabgaspfad kann in einfacher Weise die zuvor verdichtete Luft dem Auslass des Brennstoffzellenstapels zugeführt werden. Der Nebenpfad mündet hierzu in den Kathodenabgaspfad. Über die Verbindung des Hauptpfads mit dem Kathodenabgaspfad kann bei umgekehrter Strömungsrichtung durch den Brennstoffzellenstapel die über den Einlass des Brennstoffzellenstapels austretende Luft in den Kathodenabgaspfad eingeleitet werden. Bevorzugt sind daher der Hauptpfad und der Nebenpfad immer dann zeitgleich mit dem Kathodenabgaspfad verbunden, wenn der Brennstoffzellenstapel zum Befeuchten der Membranen in umgekehrter Strömungsrichtung durchströmt wird. Das heißt, immer dann, wenn der Hauptpfad des Kathodengaspfads mit Hilfe der Sperreinrichtung gesperrt ist.

Des Weiteren wird vorgeschlagen, dass der Hauptpfad des Kathodengaspfads mit einem Nebenpfad des Kathodenabgaspfads und der Nebenpfad des Kathodengaspfads mit einem Hauptpfad des Kathodenabgaspfads verbindbar sind. Dadurch ist sichergestellt, dass für die über den Nebenpfad des Kathodengaspfads in den Kathodenabgaspfad eingeleitete verdichtete Luft und für die über den Hauptpfad des Kathodengaspfad in den Kathodenabgaspfad eingeleitete Luft unterschiedliche Strömungswege zur Verfügung stehen. Denn die Strömungsrichtung ist gegenläufig.

Gemäß einer bevorzugten Ausführungsform der Erfindung weisen somit der Kathodengaspfad als auch der Kathodenabgaspfad jeweils einen Haupt- und einen Nebenpfad auf. Das heißt, dass sich der Kathodengaspfad als auch der Kathodenabgaspfad verzweigen. Auf diese Weise ergibt sich eine baumähnliche Struktur der Strömungswege. Welcher Strömungsweg jeweils nutzbar ist, kann mit Hilfe der Sperreinrichtung gesteuert bzw. geregelt werden.

Die Sperreinrichtung weist hierzu bevorzugt bewegliche Sperrelemente zum Absperren des Hauptpfads und der Nebenpfads des Kathodengaspfads auf. Das heißt, dass die Sperreinrichtung mindestens zwei bewegliche Sperrelement umfasst. Weitere bewegliche Sperrelemente sind vorzugsweise im Hauptpfad und im Nebenpfad des Kathodenabgaspfads angeordnet. In diesem Fall umfasst die Sperreinrichtung mindestens vier bewegliche Sperrelemente Die beweglichen Sperrelemente können beispielsweise die Form von Klappen besitzen. Auf diese Weise ist die Sperreinrichtung besonders kostengünstig realisierbar.

Gemäß einer vorteilhaften Ausgestaltung der Sperreinrichtung sind mindestens zwei Sperrelemente drehbeweglich um eine gemeinsame Drehachse angeordnet. Die Sperrelemente können somit gemeinsam betätigt werden. Damit ein Sperrelement in eine Offenstellung und zeitgleich das jeweils andere Sperrelement in eine Sperrstellung überführt werden können, wird ferner vorgeschlagen, dass die Winkellage der Sperrelemente um einen Winkel α versetzt ist. Der Winkel α kann beispielsweise 90° betragen.

Sofern die beweglichen Sperrelemente nicht nur im Haupt- und Nebenpfad des Kathodengaspfads, sondern ferner im Haupt- und Nebenpfad des Kathodenabgaspfads angeordnet sind, sind diese analog angeordnet, das heißt drehbeweglich um eine gemeinsame Drehachse und weiterhin bevorzugt in ihrer Winkellage um einen Winkel α versetzt zueinander. Die Drehachse kann im Übrigen die gleiche Drehachse sein, um welche die Sperrelemente zum Sperren des Haupt- und Nebenpfads des Kathodengaspfads drehbeweglich angeordnet sind. Dies ermöglicht eine besonders kompakte Anordnung der Sperrelemente der Sperreinrichtung und ist daher besonders bauraumschonend. Ferner können alle Sperrelemente gleichzeitig angesteuert bzw. betätigt werden.

Im Normalbetrieb des Brennstoffzellensystems sind vorzugsweise die beiden Hauptpfade, das heißt der Hauptpfad des Kathodengaspfads als auch der Hauptpfad des Kathodenabgaspfads, geöffnet und die beiden Nebenpfade sind jeweils durch ein bewegliches Sperrelement der Sperreinrichtung gesperrt. Zur Umkehrung der Strömungsrichtung im Brennstoffzellenstapel wird die Sperreinrichtung betätigt, so dass nunmehr die beiden Hauptpfade gesperrt und die beiden Nebenpfade geöffnet sind. Die beiden in den Nebenpfaden angeordneten Sperrelemente werden hierzu aus der Sperrstellung in die Offenstellung bewegt. Die beiden in den Hauptpfaden angeordneten Sperrelemente werden aus der Offenstellung in die Sperrstellung bewegt.

Bevorzugt weisen die Sperrelemente Freiläufe auf. Die Freiläufe stellen sicher, dass im Abstellfall die jeweils geöffneten Sperrelemente in eine Sperrstellung überführbar sind, ohne dass dabei die sich bereits in der Sperrstellung befindenden Sperrelemente geöffnet werden. Das heißt, dass zum vollständigen Absperren der Luftzufuhr im Abstellfall alle Sperrelemente gleichzeitig in eine Sperrstellung gebracht werden können.

Die beiden weiteren beweglichen Sperrelemente können anlog den zuvor beschriebenen Sperrelementen ausgebildet sein, beispielsweise in Form einfacher Klappen. Diese können wiederum drehbeweglich um eine gemeinsame Drehachse angeordnet sein, so dass sie gemeinsam betätigbar sind. Die Winkellage ist jedoch vorzugsweise nicht versetzt zueinander, da sich die beiden weiteren beweglichen Sperrelemente gleichzeitig entweder in der Sperrstellung oder in der Offenstellung befinden.

Bevorzugt sind die beiden weiteren beweglichen Sperrelemente unabhängig von den zuvor beschriebenen Sperrelementen ansteuerbar. Mit Hilfe der beiden weiteren beweglichen Sperrelemente kann somit zugleich eine Bypass-Funktion realisiert werden, die den Wegfall des Bypasspfads und des hierin angeordneten Bypassventils ermöglichen. Auf diese Weise kann das Brennstoffzellensystem weiter vereinfacht werden.

Der Luftverdichter des vorgeschlagenen Brennstoffzellensystems weist mindestens ein Verdichterrad auf, das vorzugsweise auf einer gemeinsamen Welle mit einem im Kathodenabgaspfad angeordneten Turbinenrad angeordnet ist. Der Luftverdichter kann somit besonders energieeffizient betrieben werden, da mit Hilfe des Turbinenrads Energie rückgewonnen wird. Durch die vorgeschlagene Nutzung von Produktwasser ist zudem das Turbinenrad vor Schäden durch Tropfenschlag geschützt. Denn das Produktwasser wird zum Befeuchten der Membranen der Brennstoffzellen genutzt, so dass mit dem Kathodenabgas deutlich weniger bis gar kein Produktwasser ausgetragen wird.

Zur Lösung der eingangs genannten Aufgabe wird darüber hinaus ein Verfahren zum Betreiben eines Brennstoffzellensystems vorgeschlagen, das einen Brennstoffzellenstapel mit einer Kathode umfasst. Bei dem Verfahren wird der Kathode im Normalbetrieb über einen Kathodengaspfad Luft zugeführt, die zuvor mit Hilfe eines Luftverdichters verdichtet worden ist. Erfindungsgemäß wird zeitweise die Strömungsrichtung der mit Hilfe des Luftverdichters verdichteten Luft durch den Brennstoffzellenstapel zur Membranbefeuchtung umgekehrt. Auf diese Weise kann das Produktwasser einer Nutzung zugeführt werden, die zugleich eine zusätzliche Befeuchtungseinrichtung im Kathodengaspfad entbehrlich machen. Auf diese Weise können der Bauraumbedarf und die Kosten des Brennstoffzellensystems gesenkt werden.

Zur Umkehrung der Strömungsrichtung durch den Brennstoffzellenstapel werden bevorzugt mit Hilfe einer Sperreinrichtung ein mit einem Einlass des Brennstoffzellenstapels verbundener Hauptpfad des Kathodengaspfads gesperrt und ein mit einem Auslass des Brennstoffzellenstapels verbundener Nebenpfad des Kathodengaspfads geöffnet. Das heißt, dass insbesondere das zuvor beschriebene erfindungsgemäße Brennstoffzellensystem zur Durchführung des erfindungsgemäßen Verfahrens geeignet ist, da hier der Kathodengaspfad einen Haupt- und einen Nebenpfad sowie eine Sperreinrichtung zum wahlweise Sperren der beiden Pfade umfasst. Sofern mit Hilfe der Sperreinrichtung sowohl der Hauptpfad als auch der Nebenpfad sperrbar sind, kann im Abstellfall mit Hilfe der Sperreinrichtung die Luftzufuhr in Richtung der Kathode in Gänze gesperrt werden. Die Sperreinrichtung vermag somit mindestens ein Absperrventil zu ersetzen, so dass das Brennstoffzellensystem weiter vereinfacht wird.

Bevorzugt wird eine Sperreinrichtung mit beweglichen Sperrelementen, beispielsweise in Form von Klappen, verwendet. Die Sperreinrichtung kann somit bauraumschonend und zugleich kostengünstig umgesetzt werden. Die beweglichen Sperrelemente sind vorzugsweise um mindestens eine Drehachse drehbeweglich angeordnet. Durch eine Drehbewegung der Sperrelemente kann bzw. können somit der Haupt- und/oder der Nebenpfad des Kathodengaspfads gesperrt werden. Über einen Freilauf kann sichergestellt werden, dass sowohl der Haupt- als auch der Nebenpfad, und zwar zeitgleich, durch die Sperrelemente gesperrt werden.

Die Erfindung wird nachfolgend anhand der beigefügten Zeichnungen näher erläutert. Diese zeigen:
Fig. 1 eine schematische Darstellung eines Kathodenbereichs eines Brennstoffzellensystems,
Fig. 2 eine schematische Darstellung eines Kathodenbereichs eines erfindungsgemäßen Brennstoffzellensystems bei Normalbetrieb,
Fig. 3 eine schematische Darstellung des Kathodenbereichs des Brennstoffzellensystems der Fig. 2 bei Umkehrung der Strömungsrichtung durch den Brennstoffzellenstapel,
Fig. 4 eine schematische Darstellung des Kathodenbereichs des Brennstoffzellensystems der Fig. 1 im Abstellfall, und
Fig. 5 eine schematische Darstellung eines Kathodenbereichs eines zweiten erfindungsgemäßen Brennstoffzellensystems.

### Ausführliche Beschreibung der Zeichnungen

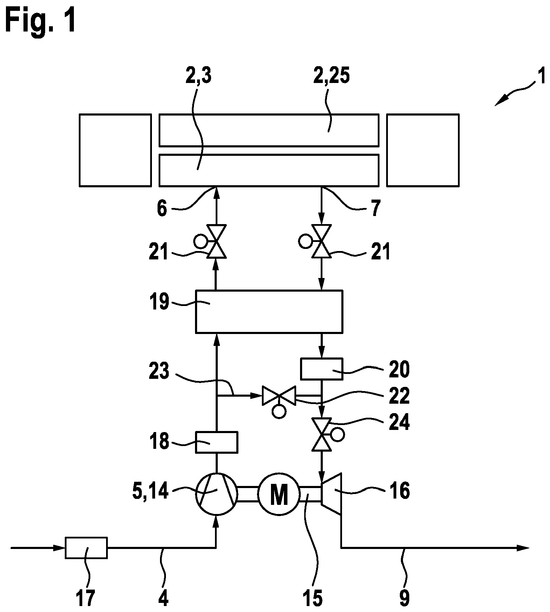

Fig. 1 zeigt ein Brennstoffzellensystem 1, umfassend einen Brennstoffzellenstapel 2 mit einer Kathode 3 und einer Anode 25. Der Kathode 3 ist über einen Kathodengaspfad 4 Luft zuführbar. Die Luft wird der Umgebung entnommen, durch einen Luftfilter 17 geführt und mit Hilfe eines im Kathodengaspfad 4 angeordneten, elektromotorisch angetriebenen Luftverdichters 5 verdichtet. Da sich die Luft beim Verdichten erwärmt, wird sie vor einem Einlass 6 des Brennstoffzellenstapels 2 mit Hilfe einer stromabwärts des Luftverdichters 5 im Kathodengaspfad 4 angeordneten Kühleinrichtung 18 abgekühlt. Mit Hilfe einer stromabwärts der Kühleinrichtung 18 angeordneten Befeuchtungseinrichtung 19 wird die zuvor verdichtete und abgekühlte Luft zudem befeuchtet. Das Befeuchten soll ein Austrocknen der Membranen der Brennstoffzellen des Brennstoffzellenstapels 2 verhindern. Zwar fällt während des Energiewandlungsprozesses in den Brennstoffzellen Wasser an, dieses kann jedoch ein Austrocknen der Membranen nicht verhindern, da dieses zusammen mit den abgereicherten Gasen aus dem Brennstoffzellenstapels ausgeleitet wird.

Das Kathodenabgas wird über einen Auslass 7 des Brennstoffzellenstapels 2 in einen Kathodenabgaspfad 9 eingeleitet und einer im Kathodenabgaspfad 9 angeordneten Abgasturbine zugeführt. Die Abgasturbine weist ein Turbinenrad 16 auf, das auf einer Welle 15 mit einem Verdichterrad 14 des Luftverdichters 5 angeordnet ist. Die von dem Kathodenabgas angeströmte Abgasturbine unterstützt somit den elektromotorischen Antrieb des Luftverdichters 5. Da das Kathodenabgas Produktwasser mitführt und im Kathodenabgas enthaltene Wassertopfen zu Schäden an der Abgasturbine führen können ("Tropfenschlag"), ist stromaufwärts der Abgasturbine ein Wasserabscheider 20 im Kathodenabgaspfad 9 angeordnet.

Bei dem in der Fig. 1 dargestellten Brennstoffzellensystem 1 sind der Kathodengaspfad 4 und der Kathodenabgaspfad 9 jeweils über ein Absperrventil 21 absperrbar. Durch Schließen der Absperrventile 21 soll im Abstellfall verhindert werden, dass der Kathode 3 des Brennstoffzellenstapels 2 weiterhin Luft zugeführt wird. Über einen Bypasspfad 23 mit einem hierin angeordneten Bypassventil 22 können der Kathodengaspfad 4 und der Kathodenabgaspfad 9 zur Umgehung des Brennstoffzellenstapels 2 kurz geschlossen werden. Im Kathodenabgaspfad 9 ist zudem stromaufwärts der Abgasturbine ein Druckregler 24 angeordnet.

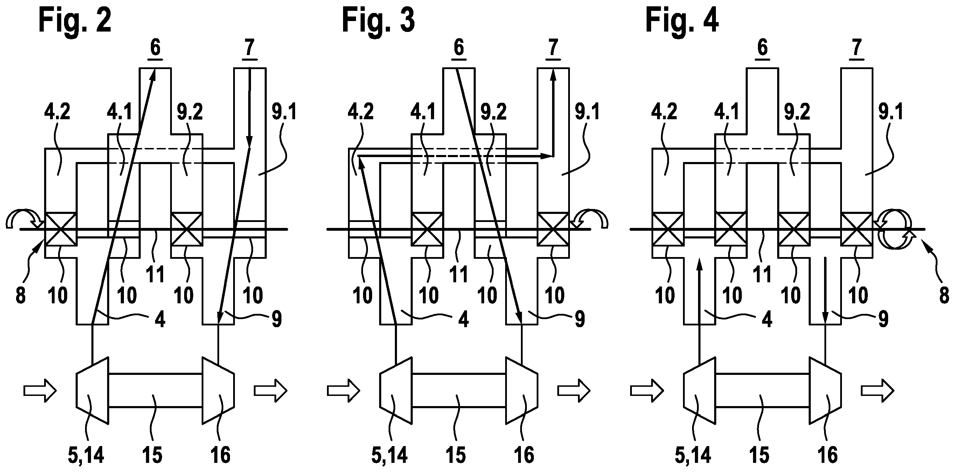

Die Erfindung wird nachfolgend anhand der Figuren 2 bis 5 beispielhaft erläutert.

Der stark vereinfachten schematischen Darstellung der Fig. 2 ist ein Luftverdichter 5 mit einem Verdichterrad 14 zu entnehmen, das gemeinsam mit einem Turbinenrad 16 einer Abgasturbine auf einer Welle 15 angeordnet ist. Das Verdichterrad 14 ist in einem Kathodengaspfad 4 angeordnet, über den einem Einlass 6 eines Brennstoffzellenstapels (nicht dargestellt) mit Hilfe des Luftverdichters 5 verdichtete Luft zuführbar ist. Das Turbinenrad 16 ist in einem Kathodenabgaspfad 9 angeordnet und wird von Kathodenabgas angeströmt, das den Brennstoffzellenstapel über einen Auslass 7 verlässt. Der Kathodengaspfad 4 und der Kathodenabgaspfad 9 verzweigen sich, so dass der Kathodengaspfad 4 als auch der Kathodenabgaspfad 9 jeweils einen Hauptpfad 4.1, 9.1 und einen Nebenpfad 4.2, 9.2 ausbilden. Somit ergibt sich eine baumartige Struktur der Strömungswege.

In den Hauptpfaden 4.1, 9.1 und in den Nebenpfaden 4.2, 9.2 sind bewegliche Sperrelemente 10 einer Sperreinrichtung 8 angeordnet, wobei es sich vorliegend um einfache Klappen handelt, die drehbeweglich um eine gemeinsame Drehachse 11 angeordnet sind. Die Winkellage der Sperrelemente 10 der Hauptpfade 4.1, 9.1 ist jeweils um einen Winkel α versetzt zur Winkellage der Sperrelemente 10 der Nebenpfade 4.2, 9.2 angeordnet, so dass entweder die Hauptpfade 4.1, 9.1 oder die Nebenpfade 4.2, 9.2 sperrbar sind.

In der Fig. 2 ist die Stellung der Sperrelemente 10 im Normalbetrieb des Brennstoffzellensystems 1 dargestellt. Im Normalbetrieb sind die Hauptpfade 4.1, 9.1 jeweils geöffnet und die Nebenpfade 4.2, 9.2 gesperrt. Die mit Hilfe des Luftverdichters 5 verdichtete Luft wird somit über den Hauptpfad 4.1 des Kathodengaspfads 4 dem Einlass 6 zugeführt. Über den Auslass 7 und den Hauptpfad 9.1 des Kathodenabgaspfads 9 gelangt die abgereicherte Luft bzw. das Kathodenabgas zum Turbinenrad 16 (siehe die Strömungsrichtung anzeigenden Pfeile).

In der Fig. 3 wurde die Stellung der Sperrelemente 10 durch Betätigen der Sperreinrichtung 8 verändert. Hierzu wurden die als Klappen ausgebildeten Sperrelemente 10 gedreht (siehe seitlichen Pfeil in Drehrichtung). Nunmehr geben die Sperrelemente 10 jeweils die Nebenpfade 4.2, 9.2 frei, während die Hauptpfade 4.1, 9.1 gesperrt sind (siehe die Strömungsrichtung anzeigenden Pfeile). Da der Nebenpfad 4.2 des Kathodengaspfads 4 in den Hauptpfad 9.1 des Kathodenabgaspfads 9.1 mündet, wird die mit Hilfe des Luftverdichters 5 verdichtete Luft nunmehr dem Auslass 7 des Brennstoffzellenstapels zugeführt. Der Brennstoffzellenstapel wird somit in umgekehrter Richtung durchströmt. Dabei führt die Luft Produktwasser mit, so dass mit Hilfe des Produktwasser eine Membranbefeuchtung realisiert wird. Die durch den Brennstoffzellenstapel zur Membranbefeuchtung geführte Luft tritt über den Einlass 6 aus dem Brennstoffzellenstapel aus und kann über den Hauptpfad 4.1 des Kathodengaspfads 4 in den Nebenpfad 9.2 des Kathodenabgaspfads 9 abgeführt werden.

Der Fig. 4 ist eine weitere Stellung der Sperrelemente 10 der Sperreinrichtung 8 für den Abstellfall zu entnehmen. In dieser Stellung nehmen alle Sperrelemente 10 die gleiche Winkellage ein, so dass alle Hauptpfade 4.1, 9.1 und alle Nebenpfade 4.2, 9.2 gesperrt sind. Die Luftzufuhr wird somit vollständig unterbrochen.

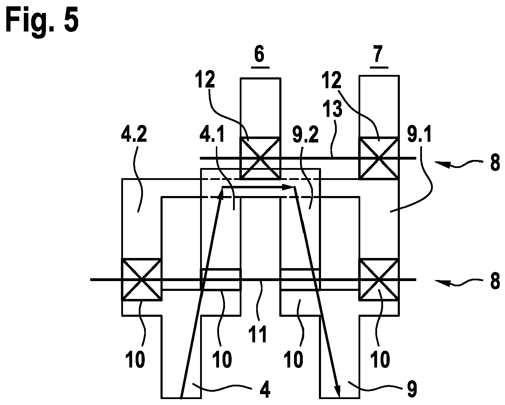

Die Fig. 5 zeigt eine Weiterbildung des Brennstoffzellensystems 1 der Figuren 2 bis 4. Hier umfasst die Sperreinrichtung 8 weitere Sperrelemente 12 in Form von Klappen, die um eine gemeinsame Drehachse 13 drehbeweglich angeordnet sind, und zwar in der gleichen Winkellage. Mit Hilfe der weiteren Sperrelemente 12 können der Einlass 6 und der Auslass 7 gesperrt werden, so dass im Abstellfall die Luftzufuhr sicher unterbrochen ist. Darüber hinaus können die weiteren Sperrelemente 12 geschlossen und die Sperrelemente 10 im Hauptpfad 4.1 des Kathodengaspfads 4 sowie im Nebenpfad 9.2 des Kathodenabgaspfads 9 geöffnet werden. Die Sperreinrichtung 8 ermöglicht auf diese Weise einen Bypassbetrieb (siehe die Strömungsrichtung anzeigende Pfeile) und vermag somit einen Bypasspfad 23 mit hierin angeordnetem Bypassventil 22 analog der Fig. 1 zu ersetzen.

## Patentansprüche

1. Brennstoffzellensystem (1), umfassend einen Brennstoffzellenstapel (2) mit einer Kathode (3), der über einen Kathodengaspfad (4) Luft als Kathodengas zuführbar ist, wobei in den Kathodengaspfad (4) ein Luftverdichter (5) integriert ist,
wobei sich der Kathodengaspfad (4) stromabwärts des Luftverdichters (5) in einen mit einem Einlass (6) des Brennstoffzellenstapels (2) verbindbaren Hauptpfad (4.1) und einen mit einem Auslass (7) des Brennstoffzellenstapels (2) verbindbaren Nebenpfad (4.2) verzweigt, wobei der Hauptpfad (4.1) und der Nebenpfad (4.2) jeweils einzeln oder gemeinsam mit Hilfe einer Sperreinrichtung (8) absperrbar sind, **dadurch gekennzeichnet, dass** die Sperreinrichtung (8) mindestens zwei weitere bewegliche Sperrelemente (12) umfasst, mittels welcher der Einlass (6) des Brennstoffzellenstapels (2) und der Auslass (7) des Brennstoffzellenstapels (2) absperrbar sind.

2. Brennstoffzellensystem (1) nach Anspruch 1,
**dadurch gekennzeichnet, dass** der Hauptpfad (4.1) und/oder der Nebenpfad (4.2) des Kathodengaspfads (4) mit Hilfe der Sperreinrichtung (8) mit einem Kathodenabgaspfad (9) verbindbar sind.

3. Brennstoffzellensystem (1) nach Anspruch 2,
**dadurch gekennzeichnet, dass** der Hauptpfad (4.1) des Kathodengaspfads (4) mit einem Nebenpfad (9.1) des Kathodenabgaspfads (9) und der Nebenpfad (4.2) des Kathodengaspfads (4) mit einem Hauptpfad (9.1) des Kathodenabgaspfads (9) verbindbar sind.

4. Brennstoffzellensystem (1) nach einem der vorhergehenden Ansprüche,
**dadurch gekennzeichnet, dass** die Sperreinrichtung (8) bewegliche Sperrelemente (10), beispielsweise in Form von Klappen, zum Absperren des Hauptpfads (4.1) und der Nebenpfads (4.2) des Kathodengaspfads (4) aufweist, wobei vorzugsweise weitere bewegliche Sperrelemente (10) im Hauptpfad (9.1) und im Nebenpfad (9.2) des Kathodenabgaspfads (9) angeordnet sind.

5. Brennstoffzellensystem (1) nach Anspruch 4,
**dadurch gekennzeichnet, dass** mindestens zwei Sperrelemente (10) drehbeweglich um eine gemeinsame Drehachse (11) angeordnet sind, wobei vorzugsweise die Winkellage der Sperrelemente (10) um einen Winkel (α) versetzt ist, und wobei weiterhin vorzugsweise der Winkel (α) 90° beträgt.

6. Brennstoffzellensystem (1) nach Anspruch 5,
**dadurch gekennzeichnet, dass** die Sperrelemente (10) Freiläufe aufweisen, so dass sie beispielsweise in die gleiche Winkellage überführbar sind.

7. Brennstoffzellensystem (1) nach Anspruch 1,
**dadurch gekennzeichnet, dass** die weiteren Sperrelemente (12), vorzugsweise in gleicher Winkellage, drehbeweglich um eine gemeinsame Drehachse (13) angeordnet sind.

8. Brennstoffzellensystem (1) nach einem der vorhergehenden Ansprüche, **dadurch gekennzeichnet, dass** der Luftverdichter (5) mindestens ein Verdichterrad (14) aufweist, das vorzugsweise auf einer gemeinsamen Welle (15) mit einem im Kathodenabgaspfad (9) angeordneten Turbinenrad (16) angeordnet ist.

9. Verfahren zum Betreiben eines Brennstoffzellensystems (1) nach einem der vorhergehenden Ansprüche, umfassend einen Brennstoffzellenstapel (2) mit einer Kathode (3), der im Normalbetrieb über einen Kathodengaspfad (4) mit Hilfe eines Luftverdichters (5) verdichtete Luft zugeführt wird, wobei zeitweise die Strömungsrichtung der mit Hilfe des Luftverdichters (5) verdichteten Luft durch den Brennstoffzellenstapel (2) zur Membranbefeuchtung umgekehrt wird.

10. Verfahren nach Anspruch 9,
**dadurch gekennzeichnet, dass** zur Umkehrung der Strömungsrichtung mit Hilfe einer Sperreinrichtung (8) ein mit einem Einlass (6) des Brennstoffzellenstapels (2) verbundener Hauptpfad (4.1) des Kathodengaspfads (4) gesperrt und ein mit einem Auslass (7) des Brennstoffzellenstapels (2) verbundener Nebenpfad (4.2) des Kathodengaspfads (4) geöffnet werden.

11. Verfahren nach Anspruch 9 oder 10,
**dadurch gekennzeichnet, dass** eine Sperreinrichtung (8) mit beweglichen Sperrelementen (10, 12), beispielsweise in Form von Klappen, verwendet wird, die vorzugsweise um mindestens eine Drehachse (11, 13) drehbeweglich angeordnet sind.

## Claims

1. Fuel cell system (1), comprising a fuel cell stack (2) with a cathode (3), to which air can be supplied via a cathode gas path (4) as cathode gas, wherein an air compressor (5) is integrated into the cathode gas path (4),
wherein the cathode gas path (4) branches downstream of the air compressor (5) into a main path (4.1) which can be connected to an inlet (6) of the fuel cell stack (2) and a secondary path (4.2) which can be connected to an outlet (7) of the fuel cell stack (2), wherein the main path (4.1) and the secondary path (4.2) can each be shut off individually or together with the aid of a blocking device (8), **characterized in that** the blocking device (8) comprises at least two further movable blocking elements (12), by means of which the inlet (6) of the fuel cell stack (2) and the outlet (7) of the fuel cell stack (2) can be shut off.

2. Fuel cell system (1) according to Claim 1,
**characterized in that** the main path (4.1) and/or the secondary path (4.2) of the cathode gas path (4) can be connected to a cathode off-gas path (9) with the aid of the blocking device (8).

3. Fuel cell system (1) according to Claim 2,
**characterized in that** the main path (4.1) of the cathode gas path (4) can be connected to a secondary path (9.1) of the cathode off-gas path (9) and the secondary path (4.2) of the cathode gas path (4) can be connected to a main path (9.1) of the cathode off-gas path (9).

4. Fuel cell system (1) according to any of the preceding claims,
**characterized in that** the blocking device (8) has movable blocking elements (10), for example in the form of flaps, for shutting off the main path (4.1) and the secondary path (4.2) of the cathode gas path (4), wherein further movable blocking elements (10) are preferably arranged in the main path (9.1) and in the secondary path (9.2) of the cathode off-gas path (9).

5. Fuel cell system (1) according to Claim 4,
**characterized in that** at least two blocking elements (10) are arranged rotatably about a common rotation axis (11), wherein the angular position of the blocking elements (10) is preferably offset through an angle (α), and wherein the angle (α) is further preferably 90°.

6. Fuel cell system (1) according to Claim 5,
**characterized in that** the blocking elements (10) have freewheels, so that they can be moved to the same angular position, for example.

7. Fuel cell system (1) according to Claim 1,
**characterized in that** the further blocking elements (12) are arranged rotatably about a common rotation axis (13), preferably in the same angular position.

8. Fuel cell system (1) according to any of the preceding claims, **characterized in that** the air compressor (5) has at least one compressor wheel (14), which is preferably arranged on a common shaft (15) with a turbine wheel (16) arranged in the cathode off-gas path (9).

9. Method for operating a fuel cell system (1) according to any of the preceding claims, comprising a fuel cell stack (2) with a cathode (3), to which air compressed with the aid of an air compressor (5) is supplied via a cathode gas path (4) during normal operation, wherein the flow direction of the air compressed with the aid of the air compressor (5) through the fuel cell stack (2) is temporarily reversed to moisten the membrane.

10. Method according to Claim 9,
**characterized in that** a main path (4.1) of the cathode gas path (4) connected to an inlet (6) of the fuel cell stack (2) is blocked and a secondary path (4.2) of the cathode gas path (4) connected to an outlet (7) of the fuel cell stack (2) is opened with the aid of a blocking device (8) to reverse the flow direction.

11. Method according to Claim 9 or 10,
**characterized in that** a blocking device (8) with movable blocking elements (10, 12), for example in the form of flaps, is used, which blocking elements are preferably arranged rotatably about at least one rotation axis (11, 13).

## Revendications

1. Système de piles à combustible (1) comprenant un empilement de piles à combustible (2) avec une cathode (3), à laquelle peut être acheminé de l'air en tant de gaz cathodique via un trajet de gaz cathodique (4), un compresseur d'air (5) étant intégré dans le trajet de gaz cathodique (4) ;
le trajet de gaz cathodique (4) se ramifiant en aval du compresseur d'air (5) en un trajet principal (4.1), qui peut être relié à une entrée (6) de l'empilement de piles à combustible (2), et un trajet secondaire (4.2), qui peut être relié à une sortie (7) de l'empilement de piles à combustible (2), le trajet principal (4.1) et le trajet secondaire (4.2) pouvant respectivement être fermés individuellement ou conjointement à l'aide d'un dispositif de blocage (8), **caractérisé en ce que** le dispositif de blocage (8) comprend au moins deux éléments de blocage (12) mobiles supplémentaires au moyen desquels peuvent être fermées l'entrée (6) de l'empilement de piles à combustible (2) et la sortie (7) de l'empilement de piles à combustible (2).

2. Système de piles à combustible (1) selon la revendication 1,
**caractérisé en ce que** le trajet principal (4.1) et/ou le trajet secondaire (4.2) du trajet de gaz cathodique (4) peuvent être reliés à un trajet d'effluent gazeux cathodique (9) à l'aide du dispositif de blocage (8).

3. Système de piles à combustible (1) selon la revendication 2,
**caractérisé en ce que** le trajet principal (4.1) du trajet de gaz cathodique (4) peut être relié à un trajet secondaire (9.1) du trajet d'effluent gazeux cathodique (9) et le trajet secondaire (4.2) du trajet de gaz cathodique (4) peut être relié à un trajet principal (9.1) du trajet d'effluent gazeux cathodique (9).

4. Système de piles à combustible (1) selon l'une des revendications précédentes,
**caractérisé en ce que** le dispositif de blocage (8) possède des éléments de blocage mobiles (10), par exemple sous forme de clapets, servant à fermer le trajet principal (4.1) et le trajet secondaire (4.2) du trajet de gaz cathodique (4), des éléments de blocage mobiles (10) supplémentaires étant de préférence disposés dans le trajet principal (9.1) et dans le trajet secondaire (9.2) du trajet d'effluent gazeux cathodique (9).

5. Système de piles à combustible (1) selon la revendication 4,
**caractérisé en ce qu'**au moins deux éléments de blocage (10) supplémentaires
sont disposés mobiles en rotation autour d'un axe de rotation (11) commun, la position angulaire des éléments de blocage (10) étant de préférence décalée d'un angle (α), et l'angle (α) étant en outre de préférence égal à 90°.

6. Système de piles à combustible (1) selon la revendication 5,
**caractérisé en ce que** les éléments de blocage (10) possèdent des dispositifs de mouvement libre, de sorte qu'ils peuvent par exemple être déplacés dans la même position angulaire.

7. Système de piles à combustible (1) selon la revendication 1,
**caractérisé en ce que** les éléments de blocage supplémentaires (12) sont disposés mobiles en rotation, de préférence dans la même position angulaire, autour d'un axe de rotation commun (13).

8. Système de piles à combustible (1) selon l'une des revendications précédentes,
**caractérisé en ce que** le compresseur d'air (5) possède au moins une roue de compresseur (14), qui est disposée de préférence sur un arbre commun (15) avec une roue de turbine (16) disposée sur le trajet d'effluent gazeux cathodique (9).

9. Procédé pour faire fonctionner un système de piles à combustible (1) selon l'une des revendications précédentes, comprenant un empilement de piles à combustible (2) avec une cathode (3) à laquelle, en fonctionnement normal, est acheminé de l'air comprimé via un trajet de gaz cathodique (4) à l'aide d'un compresseur d'air (5), la direction d'écoulement de l'air comprimé à l'aide du compresseur d'air (5) à travers l'empilement de piles à combustible (2) étant temporairement inversée pour l'humidification de la membrane.

10. Procédé selon la revendication 9,
**caractérisé en ce que**, en vue de l'inversion de la direction d'écoulement, un trajet principal (4.1) du trajet de gaz cathodique (4), relié à une entrée (6) de l'empilement de piles à combustible (2) est fermé à l'aide d'un dispositif de blocage (8) et un trajet secondaire (4.2) du trajet de gaz cathodique (4), relié à une sortie (7) de l'empilement de piles à combustible (2) est ouvert.

11. Procédé selon la revendication 9 ou 10,
**caractérisé en ce qu'**un dispositif de blocage (8) comprenant des éléments de blocage (10, 12) mobiles, par exemple sous forme de clapets, est utilisé, lesquels sont disposés de préférence mobiles en rotation autour d'au moins un axe de rotation (11, 13).
